# EUROPEAN PATENT APPLICATION

(11) **EP 4 579 485 A1**
(43) Date of publication of application: **02.07.2025**
(21) Application number: 24222824.5
(22) Date of filing: 23.12.2024
(51) Int. Cl.: G06F 16/56

(54) **DEEP SEARCH BASED ON COMPONENTS OF 3-D MODELS**

(30) Priority: 29.12.2023 GR 20230101086; 11.07.2024 US 202418770571
(71) Applicant: Trimble Inc, Westminster CO 80021 (US)
(72) Inventor: HARVENT, Jacques, Westminster, 80021 (US); BANFIELD, Robert, Westminster, 80021 (US); WEBER, Bruno, Westminster, 80021 (US); KOMNINOS, Aristodimos, Westminster, 80021 (US)
(74) Representative: AWA Sweden AB

(57) **Abstract**

A computing device can receive 3-D model data that includes components included in 3-D models. The components can be represented by 2-D images. The computing device can generate representation vectors that correspond to different 2-D images. The computing device can index the representation vectors to facilitate queries with respect to the components. The computing device can receive a query indicating a request to identify 2-D images associated with the query. The computing device can compare an embedding of the query to the representation vectors to identify a set of representation vectors that match the embedding. The computing device can provide, on a digital user interface, the 2-D images corresponding to the set of representation vectors.

## Description

### CROSS-REFERENCE TO RELATED APPLICATIONS

The present application claims priority to Greek Patent Application No. 20230101086, filed December 29, 2023, the entire contents of which are incorporated herein by reference for all purposes.

### BACKGROUND

This disclosure relates in general to search querying and determining a similarity between assets with different dimensions. Models, such as three-dimensional models, computer aided design (CAD) models, other assets, and the like, can be generated on-the-fly, generated and stored (e.g., in a database), etc. Various terms and/or words can be associated with the models and can be used to identify the models via a search query. Additionally or alternatively, the models may be made up of one or more components. For example, a model may include one component, two components, three components, four components, or more than four components that, when aggregated, form the model. In some cases, a user may want to identify a particular component included in a particular model. Searching for and identifying the particular component may be difficult. For example, identifying the particular model may be difficult since the particular model may be located in a data store having an excessive number of models. Additionally or alternatively, the user may not know which model includes the particular component.

### SUMMARY

This disclosure relates to querying a three-dimensional model or a component included therein, and without limitation to providing a user interface, in response to receiving a query, that presents a set of components and/or 3-D models being similar to the query. The query may include a text-based input, such as a string of characters or natural language words, and the query may indicate that an entity, such as a user of a computing device, is requesting to access a particular component included a 3-D model or the 3-D model itself. A component of a 3-D model may be or include a portion of the 3-D model. In examples in which the 3-D model is a chair, a component included in the 3-D model may be or include a leg of the chair, a back of the chair, a seat of the chair, and the like. The computing device may receive the query and may search a previously generated index of 3-D models, and components thereof, to identify the particular component and/or a set of components most similar to the particular component. In some examples, the index may be generated substantially contemporaneously with respect to the computing device receiving the query, may be continuously generated and/or maintained based on receiving new and/or updated 3-D models or components thereof, and the like. The computing device may transform the query into an embedding, or otherwise into a form that can be used to search the index, which may include representation vectors that represent the 3-D models and/or the components included therein, and the computing device may compare the embedding to the representation vectors to identify the particular component or the set of particular components. The computing device can generate a user interface that may present the particular component and/or the set of particular components in descending order, or descending prominence, of similarity between the embedding and corresponding representation vectors. The user interface may provide 2-D thumbnails, or other suitable forms of 2-D images, of the components and/or the 3-D models corresponding to the corresponding representation vectors. In some examples, the user interface may receive input from the entity indicating that a first representation vector presented on the user interface represents the particular component desired by the entity. In a particular example, the entity can select the particular component on the user interface, and the computing device can automatically populate a file, such as a CAD file or other suitable modeling files, with the selected component.

In certain embodiments, a method comprises: receiving, by a computing device, 3-D model data that includes a set of 3-D models and components included in the set of 3-D models, the components included in the set of 3-D models represented by a set of 2-D images, each 2-D image of the set of 2-D images representing a component of the components included in the set of 3-D models or a group of the components included in the set of 3-D models; generating, by the computing device and using a machine-learning model, a set of representation vectors, each representation vector of the set of representation vectors corresponding to a different 2-D image of the set of 2-D images; indexing, by the computing device, the set of representation vectors to facilitate one or more queries with respect to the components included in the set of 3-D models or the groups of the components included in the set of 3-D models; receiving, by the computing device, a query from an entity, the query indicating a request by the entity to identify one or more 2-D images of the set of 2-D images that are associated with the query; comparing, by the computing device, an embedding of the query to each representation vector of the set of representation vectors to identify a set of representation vectors that at least partially match the embedding; and providing, by the computing device and on a user interface, the one or more 2-D images of the set of 2-D images corresponding to the set of representation vectors.

In an embodiment, receiving the 3-D model data can include parsing each 3-D model of the set of 3-D models to identify one or more components included in the 3-D model, and the one or more components can be included in the components included in the set of 3-D models. In an embodiments, comparing the embedding to each representation vector of the set of representation vectors can include transforming the query into the embedding using the machine-learning model. In an embodiment, generating the plurality of representation vectors can include: generating, for each 3-D model included of the set of 3-D models, a first 2-D image based on a particular view of the 3-D model, the first 2-D image included in a first portion of the plurality of the 2-D images; generating, for each component of the components, a second 2-D image based on a particular view of the component, the second 2-D image included in a second portion of the plurality of 2-D images; generating, using one or more self-supervised layers of the machine-learning model and for each 2-D image included in the first portion of the set of the 2-D images, first features corresponding to the 2-D image; and generating, using the one or more self-supervised layers of the machine-learning model and for each 2-D image included in the second portion of the set of the 2-D images, second features corresponding to the 2-D image. In an embodiment, generating the set of representation vectors can include generating, using an additional self-supervised layer of the machine-learning model, the set of representation vectors based on the first features and the second features. In an embodiment, (i) indexing the plurality of representation vectors can include storing each representation vector of the set of representation vectors in a data repository, wherein the set of representation vectors can be arranged to optimize the one or more queries that involve the plurality of representation vectors; and (ii) comparing the embedding to each representation vector of the set of representation vectors can include accessing the data repository to receive the set of representation vectors. In an embodiment, receiving the query from an entity can include receiving text-based input from the entity, and the text-based input can include a string of natural language or characters indicating the request by the entity to receive a particular component of a 3-D model. In an embodiment, the method can additionally include (i) receiving subsequent input from the entity, the subsequent input indicating selection of a particular representation vector of the set of representation vectors; and (ii) automatically populating a file associated with the entity with a component or a 3-D model that is represented by the particular representation vector of the set of representation vectors.

In certain embodiments, a system comprises: a processing device; and a non-transitory computer-readable medium comprising instructions executable by the processing device to cause the processing device to perform operations comprising: receiving 3-D model data that includes a set of 3-D models and components included in the set of 3-D models, the components included in the set of 3-D models represented by a set of 2-D images, each 2-D image of the set of 2-D images representing a component of the components included in the set of 3-D models or a group of the components included in the set of 3-D models; generating, using a machine-learning model, a set of representation vectors, each representation vector of the set of representation vectors corresponding to a different 2-D image of the set of 2-D images; indexing the set of representation vectors to facilitate one or more queries with respect to the components included in the set of 3-D models or the groups of the components included in the set of 3-D models; receiving a query from an entity, the query indicating a request by the entity to identify one or more 2-D images of the set of 2-D images that are associated with the query; comparing an embedding of the query to each representation vector of the set of representation vectors to identify a set of representation vectors that at least partially match the embedding; and providing, on a user interface, the one or more 2-D images of the set of 2-D images corresponding to the set of representation vectors.

In an embodiment, the operation of receiving the 3-D model data can include parsing each 3-D model of the set of 3-D models to identify one or more components included in the 3-D model, and the one or more components can be included in the components included in the set of 3-D models. In an embodiment, the operation of comparing the embedding to each representation vector of the plurality of representation vectors can include transforming the query into the embedding using the machine-learning model. In an embodiment, the operation of generating the set of representation vectors can include: generating, for each 3-D model included of the set of 3-D models, a first 2-D image based on a particular view of the 3-D model, the first 2-D image included in a first portion of the set of the 2-D images; generating, for each component of the components, a second 2-D image based on a particular view of the component, the second 2-D image included in a second portion of the set of 2-D images; generating, using one or more self-supervised layers of the machine-learning model and for each 2-D image included in the first portion of the set of the 2-D images, first features corresponding to the 2-D image; and generating, using the one or more self-supervised layers of the machine-learning model and for each 2-D image included in the second portion of the set of the 2-D images, second features corresponding to the 2-D image. In an embodiment, (i) the operation of generating the set of representation vectors can include generating, using an additional self-supervised layer of the machine-learning model, the set of representation vectors based on the first features and the second features; (ii) the operation of indexing the set of representation vectors can include storing each representation vector of the set of representation vectors in a data repository, wherein the set of representation vectors can be arranged to optimize the one or more queries that involve the set of representation vectors; and (iii) the operation of comparing the embedding to each representation vector of the set of representation vectors can include accessing the data repository to receive the set of representation vectors. In an embodiment, the operations can additionally include: (i) receiving subsequent input from the entity, the subsequent input indicating selection of a particular representation vector of the set of representation vectors; and (ii) automatically populating a file associated with the entity with a component or a 3-D model that is represented by the particular representation vector of the set of representation vectors.

In certain embodiments, a non-transitory computer-readable medium comprises instructions executable by a processing device for causing the processing device to perform various operations relating to searching for three-dimensional models. The operations can include receiving 3-D model data that includes a set of 3-D models and components included in the set of 3-D models. The components included in the set of 3-D models can be represented by a set of 2-D images. Each 2-D image of the set of 2-D images can represent a component of the components included in the set of 3-D models or a group of the components included in the set of 3-D models. The operations can include generating, using a machine-learning model, a set of representation vectors. Each representation vector of the set of representation vectors can correspond to a different 2-D image of the set of 2-D images. The operations can include indexing the set of representation vectors to facilitate one or more queries with respect to the components included in the set of 3-D models or the groups of the components included in the set of 3-D models. The operations can include receiving a query from an entity. The query can indicate a request by the entity to identify one or more 2-D images of the set of 2-D images that may be associated with the query. The operations can include comparing an embedding of the query to each representation vector of the set of representation vectors to identify a set of representation vectors that at least partially match the embedding. The operations can include providing, on a user interface, the one or more 2-D images of the set of 2-D images corresponding to the set of representation vectors.

In an embodiment, the operation of receiving the 3-D model data can include parsing each 3-D model of the set of 3-D models to identify one or more components included in the 3-D model, the one or more components can be included in the components included in the set of 3-D models, and comparing the embedding to each representation vector of the set of representation vectors can include transforming the query into the embedding using the machine-learning model. In an embodiment, the operation of generating the plurality of representation vectors can include: generating, for each 3-D model included of the set of 3-D models, a first 2-D image based on a particular view of the 3-D model, the first 2-D image included in a first portion of the set of the 2-D images; generating, for each component of the components, a second 2-D image based on a particular view of the component, the second 2-D image included in a second portion of the set of 2-D images; generating, using one or more self-supervised layers of the machine-learning model and for each 2-D image included in the first portion of the set of the 2-D images, first features corresponding to the 2-D image; and generating, using the one or more self-supervised layers of the machine-learning model and for each 2-D image included in the second portion of the set of the 2-D images, second features corresponding to the 2-D image. In an embodiment, wherein the operation of generating the set of representation vectors can include generating, using an additional self-supervised layer of the machine-learning model, the set of representation vectors based on the first features and the second features. In an embodiment, (i) the operation of indexing the set of representation vectors can include storing each representation vector of the set of representation vectors in a data repository, and the set of representation vectors can be arranged to optimize the one or more queries that involve the set of representation vectors; and (ii) the operation of comparing the embedding to each representation vector of the set of representation vectors can include accessing the data repository to receive the set of representation vectors. In an embodiment, the operations further comprise: (i) receiving subsequent input from the entity, the subsequent input indicating selection of a particular representation vector of the set of representation vectors; and (ii) automatically populating a file associated with the entity with a component or a 3-D model that is represented by the particular representation vector of the set of representation vectors.

Further areas of applicability of the present disclosure will become apparent from the detailed description provided hereinafter. It should be understood that the detailed description and specific examples, while indicating various embodiments, are intended for purposes of illustration only and are not intended to limit the scope of the disclosure.

### BRIEF DESCRIPTION OF THE DRAWINGS

The present disclosure is described in conjunction with the appended figures.
FIG. 1 depicts a computing environment in which a deep search can be used to identify components or 3-D models based on a query.
FIG. 2 depicts an architecture of an embodiment of a machine-learning model for generating a representation vector for images and/or models.
FIG. 3 depicts a block diagram of an embodiment of a computer system that can be used to perform operations described herein.
FIG. 4 depicts an embodiment of a process for generating and indexing a data store to facilitate a deep search for identifying components or 3-D models based on a query.
FIG. 5 depicts an embodiment of a process for identifying components or 3-D models based on a query using a deep search.
FIG. 6 depicts an embodiment of a process for generating a representation vector that represents a two-dimensional image for facilitating a deep search for a three-dimensional model or a component included therein.

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

### DETAILED DESCRIPTION

The ensuing description provides preferred exemplary embodiment(s) only and is not intended to limit the scope, applicability, or configuration of the disclosure. Rather, the ensuing description of the preferred exemplary embodiment(s) will provide those skilled in the art with an enabling description for implementing a preferred exemplary embodiment. It is understood that various changes may be made in the function and arrangement of elements without departing from the spirit and scope as set forth in the appended claims.

This disclosure, without limitation, relates to identifying a model, such as a digital model, or a component thereof, using a deep search. The model may include a three-dimensional model such as a computer-aided design (CAD) model or other suitable type of three-dimensional asset such as a digital, three-dimensional asset. The component may be a portion of the model, may be a nested component, such as a component within a component of the model, and the like. For example, the model may be made up of one component, two different components, three different components, four different components, five different components or more than five different components. In a particular example, if the model represents a house, then a first component may be a roof of the house, a second component may be a chimney of the house, a third component may be one or more walls of the house, and so on. If the model is a CAD model, then the component may be a subset of data included in the CAD model. The deep search may be a type of search that uses text-based data as input and uses machine-learning techniques and other suitable techniques to map the text-based data to output that may identify a most similar set of models or components included in models. In some examples, the deep search may additionally or alternative receive image data as input to identify the most similar set of models or components included in models.

In some examples, a computing device can generate and/or index a data repository that can facilitate the deep search. The computing device can receive data that includes a set of 3-D models, which may each include one or more separate components. The computing device can extract a 2-D image, such as a thumbnail, from each 3-D model and from each component included in the set of 3-D models to generate a set of 2-D images. The computing device can generate a set of representation vectors based on the set of 2-D images. For example, the computing device can provide the set of 2-D images to a machine-learning model, such as a hybrid machine-learning model, a self-supervised machine-learning model, or the like, and the machine-learning model can generate the set of representation vectors or embeddings based on the set of 2-D images. The computing device can store the set of representation vectors at a data repository and may index the set of representation vectors, or the data repository, to facilitate the deep search. For example, the computing device may arrange the set of representation vectors by similarity, by keyword, or the like.

In some examples, a hybrid machine-learning model can be used to generate one or more representation vectors based on one or more 2-D images. The hybrid machine-learning model may include various layers such as convolution layers, transformation layers, pooling layers, and the like. For example, the hybrid machine-learning model can include one or more layers, such as supervised layers, trained via supervised training, at least one layer, such as an unsupervised layer, trained via unsupervised training techniques, and the like. The hybrid machine-learning model can receive the one or more 2-D images as an input and can generate, or facilitate generation of, the one or more representation vectors.

In some embodiments, the supervised layers of the hybrid machine-learning model can be similar or identical to one or more layers of an image-classification convolutional neural network. The supervised layers of the hybrid machine-learning model may include one or more convolutional layers, pooling layers, and/or other suitable machine-learning layers that can, in combination, ingest an input 2-D image and can generate features corresponding to the input 2-D image. In a particular example, the supervised layers can include an ingestion layer that receives the input image and a set of convolutional layers that generates a set of features corresponding to the input 2-D image, though other examples of architecture of the supervised layers are possible. The features can be projected into multiple dimensions by the hybrid machine-learning model. For example, the unsupervised layer can project the features into *N* dimensions by performing various mathematical operations. In one such example, the unsupervised layer can receive the features generated by the supervised layers and can use the features to generate a representation vector. The representation vector can include an *N* × 1 matrix in which *N* can correspond to the number of dimensions to which the features are projected by the unsupervised layer. In some embodiments, the representation vector can be or include an *N*-dimensional vector that includes *N* numerical values corresponding to the features of the input 2-D image and generated by the supervised layers. In other examples, a self-supervised machine-learning model may be used to generate the representation vector or to generate an embedding of the input 2-D image, And the embedding can be substituted for the representation vector.

The representation vector may represent the input 2-D image. For example, the representation vector can be used to identify the input 2-D image, to facilitate the deep search for three-dimensional models or components thereof that are similar or identical to a query received by the computing device, and the like. The representation vector can be used, for example by the machine-learning model, the computing device that includes or executes the machine-learning model, other suitable computing devices, etc., as a comparison to an embedding of a query searching for a particular component or 3-D model. For example, the machine-learning model can generate and output the representation vector for the input 2-D image, and a computing device can store the representation vector in a data store indexed to facilitate the deep search. In some embodiments, the representation vector can be used to determine a similarity between a 3-D model or a component represented by an embedding of a query and a 3-D model or a component represented by the input 2-D image. The representation vector can otherwise be used to determine a similarity between at least two images and/or three-dimensional models. The machine-learning model can be used for various other applications such as searching for a model or component using an image as input.

The deep search disclosed herein improves the functioning of a computing device and improves at least one technical field. By converting two-dimensional images to representation vectors, the machine-learning model used by the deep search operations reduces an amount of computing resources (e.g., computer memory, computer processing power and/or processing time, and the like) required to search for models and/or components of models. For example, instead of comparing a similarity of each pixel of a two-dimensional image to each pixel of multiple (or even infinitely many) snapshots of each of a set of three-dimensional models or components thereof, the machine-learning model can generate a representation vector, or an embedding, both of which are much less computing-intensive than the pixel comparison or other conventional techniques. Additionally, at least the technical field of model searching is improved using the deep search operations described herein, though other technical fields can be improved using the deep search operations. For example, searching for three-dimensional models, or components thereof, using words or other text-based terms is difficult since users may not know where the three-dimensional model is stored, in which three-dimensional model the component is included, or otherwise how to search for just a portion of a three-dimensional model. The deep search obviates the need to understand where or how the three-dimensional model or the component is stored since the deep search generates representation vectors for three-dimensional models and components, and the deep search indexes the representation vectors to facilitate streamlined queries for identifying the three-dimensional models and/or the components. Thus, by generating and/or indexing the representation vectors, the deep search improves at least the technical field of 3-D model searching.

The following illustrative examples are presented to introduce the reader to the general subject matter discussed herein and are not intended to limit the scope of the disclosed concepts. The following sections describe various additional features and examples with reference to the drawings in which like numerals indicate like elements and directional descriptions are used to describe the illustrative aspects but, like the illustrative aspects, should not be used to limit the present disclosure. Additionally, the presented figures are generally described with respect to computer modeling operations, but the general subject matter discussed herein is not limited to computer modeling operations.

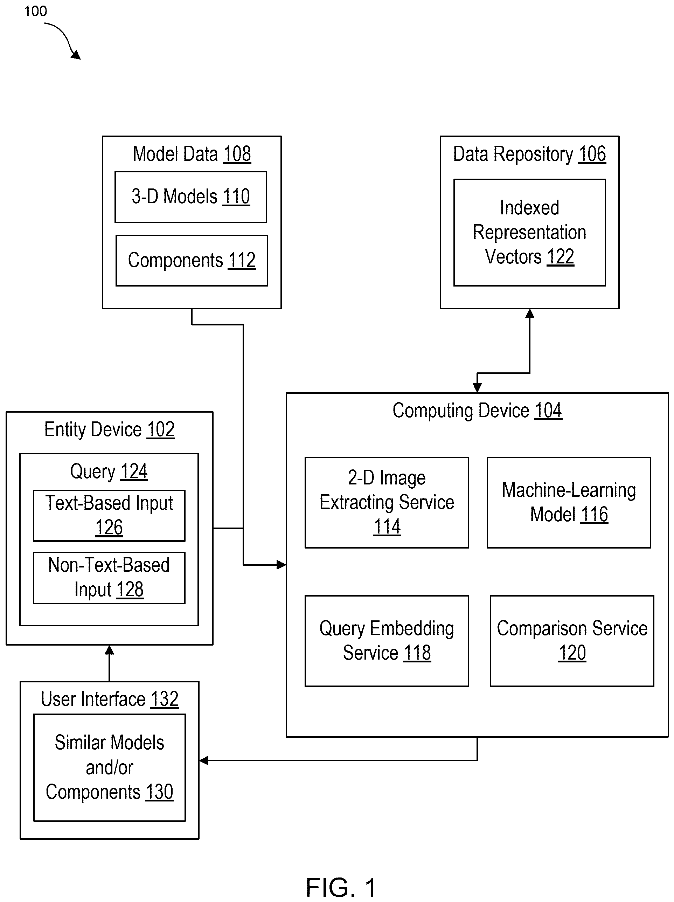

Referring first to **FIG. 1****,** a computing environment 100 in which a deep search can be used to identify components or 3-D models based on a query is illustrated. As illustrated in FIG. 1, the computing environment 100 can include an entity device 102, a computing device 104, a data repository 106, and any other suitable component for the computing environment 100. The entity device 102 may be or include any suitable personal computing device such as a mobile computing device, a desktop computing device, a tablet computer, or the like that may be used by an entity, such as a user, to communicate with the computing device 104. The computing device 104 may be or include a computer server, a server farm, a cloud computing service, or any other suitable type of computing device or computing system that can perform one or more of the operations described herein. The data repository 106 may be or include any suitable type of data storage device or system that can receive and/or store data transmitted by the computing device 104. In some embodiments, the entity device 102, the computing device 104, and/or the data repository 106 can be communicatively coupled to one another, for example via a local area network (LAN), a wide area network (WAN), such as the Internet, or the like.

The computing device 104 may receive model data 108. The model data 108 may be transmitted to the computing device 104, the computing device 104 may access the model data 108 from a separate data repository, and the like. For example, the computing device 104 may provide a program or application, such as a model-design program or application, that entities can use to generate new and/or updated three-dimensional models or components thereof. Each time an entity generates a new model, or a new component thereof, the new model, or the new component thereof, may be transmitted to, or otherwise shared with, the computing device 104 as the model data 108. In another example, the computing device 104 may access the separate data repository continuously, periodically, or the like to continuously and/or periodically access and/or receive the model data 108. In some embodiments, the model data 108 may include 3-D models 110, components 112, and any other suitable type of model data 108. The 3-D models 110 may be or include computer aided design (CAD) files or any other suitable type of file that may be configured to retain data about a 3-D model. The components 112 may be or include CAD files, image files, such as JPEG files, PNG files, and the like, that may be configured to retain data about a component of a 3-D model. A component of a 3-D model may include a portion, but may not include all, of the 3-D model.

In some examples, a component of a 3-D model may be or include a 2-D portion of the 3-D model. The 2-D portion can include a 2-D surface included in or indicated by the 3-D model, a cross-section of a particular component of the 3-D model, or the like. In a particular example, the 2-D portion can be or include a material represented by or otherwise indicated by the component. The material can be or include a type or classification of the component. For example, the component may be a 2-D surface of a wall, and the component may be a material that includes brick, drywall, wood, stone, or the like. Other examples of the 2-D portion embodiment of the component are possible.

The computing device 104 can receive the model data 108 and can execute one or more computer services, computer modules, computer models, or the like on the model data 108. For example, the computing device 104 may include a 2-D image extracting service 114, a machine-learning model 116, a query embedding service 118, and a comparison service 120, each of which may include a computer application configured to perform the functions described herein. The computing device 104 can include any additional or alternative computer services, computer modules, computer models, or the like to provide functionality to the computing device 104. The computing device 104 may receive the model data 108 and may provide the model data 108 to the 2-D image extracting service 114. The 2-D image extracting service 114 can receive the model data 108 and can generate a set of 2-D images based on the input. For example, the 2-D image extracting service 114 can access each 3-D model of the 3-D models 110 and can generate a first portion of the set of 2-D images based on the 3-D models 110. The 2-D image extracting service may identify a particular view of the 3-D model and may take a snapshot or otherwise extract image data about the particular view of the 3-D model to generate a 2-D image for the first portion of the set of 2-D images. Additionally or alternatively, the 2-D image extracting service 114 can access each component of the components 112 and can generate, for example using the same or similar techniques with respect to generating a 2-D image based on a 3-D model, a second portion of the set of 2-D images based on the components 112. The 2-D image extracting service 114 can transmit or otherwise provide the set of 2-D images to the machine-learning model 116. In some embodiments, the machine-learning model 116 may be or include a hybrid machine-learning model that includes supervised machine-learning layers and/or unsupervised machine-learning layers. In other examples, the machine-learning model 116 may be or include a self-supervised machine-learning model that may undergo supervised learning without manual labels on training data. The machine-learning model 116 can receive the set of 2-D images and can generate a set of representation vectors. For example, the machine-learning model 116 can, for each 2-D image in the set of 2-D images, generate a set of features using supervised machine-learning techniques and can project the set of features into N dimensions using unsupervised machine-learning techniques. The projected features can be or can be used to generate a representation vector that can be an *N* × 1 matrix or otherwise have dimension *N*. The set of representation vectors may represent the set of 2-D images. In other examples, the machine-learning model 116 can receive the set of 2-D images and generate a set of embeddings corresponding to the set of 2-D images. In a particular example, the machine-learning model 116 can use self-supervised techniques to generate the set of embeddings. The machine-learning model 116 can output the set of representation vectors, or the set of embeddings, for use by the computing device 104.

The computing device 104 may be communicatively coupled with the data repository 106. In some examples, the computing device 104 may include or house the data repository 106 (e.g., the data repository 106 may be included in memory on the computing device 104, etc.). The computing device 104 can store the set of representation vectors in the data repository 106. For example, the computing device 104 can access the data repository 106, such as via an API call or other suitable call, and the computing device 104 can transmit the set of representation vectors to the data repository 106. The computing device 104 can cause the data repository 106 to store the set of representation vectors in one or more particular arrangements. For example, the computing device 104 can index, or cause to be indexed (e.g., via an indexing service), the set of representation vectors in the data repository 106 as indexed representation vectors 122. In a particular example, the set of representation vectors can be indexed or otherwise arranged by common features, by similarities between particular representation vectors, and the like. The computing device 104 can otherwise suitably cause the set of representation vectors to be stored and/or indexed in the data repository 106. Additionally or alternatively, the computing device 104 can continuously, or periodically, generate the set of representation vectors based on newly received or accessed model data 108, and the computing device 104 can continuously, or periodically, cause the set of representation vectors, which may include new or updated representation vectors based on the newly received or accessed model data 108, to be stored and/or indexed in the data repository 106.

The computing device 104 may receive a query 124 from the entity device 102. The query 124 may be generated by an entity providing input to the entity device 102. In some embodiments, the query 124 can include text-based input 126, non-text-based input 128, and any other or additional input. The text-based input 126 may be or include one or more strings of natural language or characters, and the non-text-based input 128 may be or include one or more images, one or more videos, audio input, and the like. The entity device 102 may receive the text-based input 126 and/or the non-text-based input 128 and can generate the query 124. In some embodiments, the query 124 may include a request to identify one or more 3-D models, one or more components of 3-D models, or a combination thereof based on the text-based input 126 and/or the non-text-based input 128. The computing device 104 can receive the query 124 from the entity device 102, and the computing device 104 can parse the query 124 to determine how and/or whether to use the text-based input 126 and/or the non-text-based input 128.

In some embodiments, the query 124 may indicate that the entity is requesting to receive or otherwise use a particular 3-D model or a particular component of a 3-D model. The computing device 104 can execute the query embedding service 118 to embed the query 124, the text-based input 126 and/or the non-text-based input 128, or the like. Embedding the query 124, the text-based input 126 and/or the non-text-based input 128, or the like can allow the computing device 104 to generate and submit a separate query for searching the data repository 106 to identify the particular 3-D model and/or the particular component of a 3-D model, or to identify a 3-D model or a component thereof that may be most similar to the particular 3-D model and/or the particular component of a 3-D model compared to other 3-D models and components. In some examples, embedding the query 124, or any component thereof, can involve transforming the query 124, or any component thereof, into a representation vector. For example, the query embedding service 118 can use the machine-learning model 116 to generate an embedding of the query 124 by generating a set of features relating to the query 124 and by transforming the features into N dimensions to generate a representation vector, or to otherwise transform the query 124 into the embedding using self-supervised techniques. The representation vector, or any other suitable form of the embedding, can be used to generate a search query that can be transmitted to the data repository 106.

The computing device 104 can transmit the search query to the data repository 106 to identify one or more 3-D models and/or one or more components of 3-D models that may be similar or identical to the particular 3-D model or the particular component indicated by the query 124. For example, the computing device 104 can execute the comparison service 120 to generate and transmit the search query to the data repository 106. The comparison service 120 may be provided access to the indexed representation vectors 122, and the comparison service 120 may compare the embedding, which may be or include a representation vector that represents the query 124, with each representation vector included in the indexed representation vectors 122, or any subset thereof. The comparison service 120 can identify a first representation vector included in the indexed representation vectors 122 that is most similar to the embedding, can identify a second representation vector included in the indexed representation vectors 122 that is next-most similar to the embedding, and so on. In some embodiments, the comparison service 120 may continue the foregoing process until each representation vector included in the indexed representation vectors is identified and arranged by similarity. In other examples, the comparison service 120 may terminate comparison operations after a predetermined number (e.g., five, ten, 15, 20, 25, 50, or more than 50) of representation vectors of the indexed representation vectors 122 are identified and arranged by similarity.

The comparison service 120 may output a rank-order list, or other suitable type of list or type of output, that the computing device 104 can use. The rank-order list, or other output, may include the first representation vector, the second representation vector, and so on arranged such that the first representation vector is provided in the rank-order list, or other output, more prominently (e.g., higher than, larger than, bolder than, etc.) than other representation vectors included in the rank-order list or other output. The computing device 104 can receive the rank-order list and can identify the first representation vector, the second representation vector, and so on, and the computing device 104 can determine a first 3-D model or component corresponding to the first representation vector, a second 3-D model or component corresponding to the second representation vector, and so on. The first 3-D model or component, the second 3-D model or component, and so on may be similar models and/or components 130 that the computing device 104 can compile. Additionally or alternatively, the computing device 104 may generate a user interface 132 that can be used to provide the similar models and/or components 130 to the entity device 102.

In some embodiments, the similar models and/or components 130 may be a list of 3-D models and/or components of 3-D models that are most similar to the particular 3-D model or component indicated by the query 124. The similarity between the 3-D models and/or the components of 3-D models included in the similar models and/or components 130 may be determined by the computing device 104, for example via the comparison service 120, and may be determined by finding a cosine similarity, a Euclidean distance, and the like between the embedding and each representation vector of the indexed representation vectors 122, or any subset thereof. The similar models and/or components 130 may be embedded in or otherwise presented on the user interface 132. For example, the computing device 104 can generate a set of interactive elements, and each interactive element of the set of interactive elements can correspond to a different 3-D model or component included in the similar models and/or components 130. Interacting with a particular interactive element of the set of interactive elements can cause the computing device 104 to populate a file associated with the entity with the 3-D model or the component of a 3-D model corresponding to the particular interactive element. The computing device 104 can transmit the user interface 132 to the entity device 102 to request subsequent input from the entity for a selection of the particular interactive element.

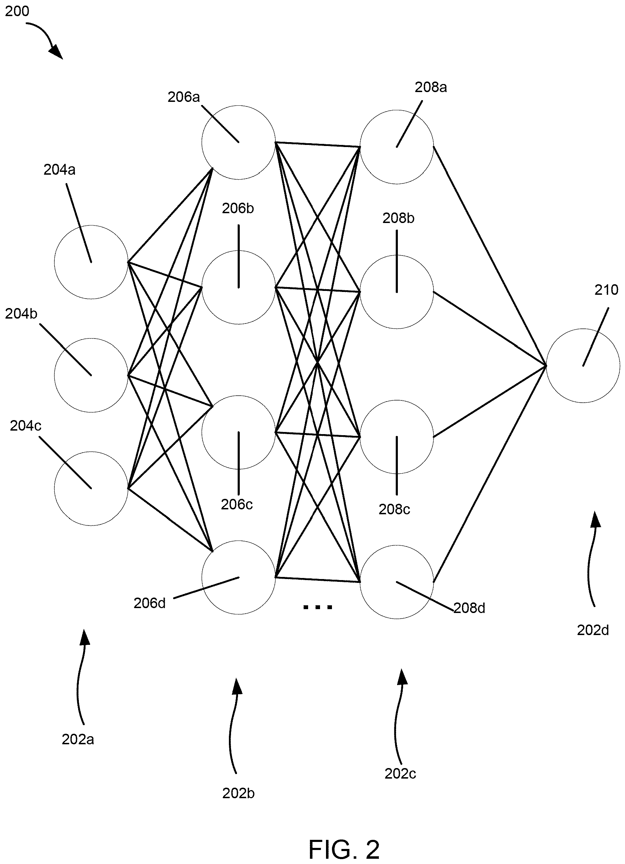

**FIG.** 2 illustrates an architecture of an embodiment of a machine-learning model 200 for generating a representation vector for images and/or models. The machine-learning model 200 may be similar or identical to the machine-learning model 116 as illustrated and described with respect to FIG. 1. In some embodiments, the machine-learning model 200 may be or include a hybrid machine-learning model that can include a combination of different types of layers such as one or more supervised layers, one or more unsupervised layers, and the like, though other suitable examples of machine-learning models, such as a generative model, a self-supervised model, and the like, are possible for the machine-learning model 200. As illustrated in FIG. 2, the machine-learning model 200 includes four layers, though any other suitable number (e.g., less than four or more than four) of machine-learning layers can be included in the machine-learning model 200 without departing from the scope of the present disclosure. Additionally or alternatively, the machine-learning model 200 can include a combination of supervised layers, which are trained using supervised training techniques, and unsupervised layers, which may be trained using unsupervised training techniques. In other examples, the machine-learning model 200 may include only supervised layers such as self-supervised layers.

The machine-learning model 200 can include layers 202a-d and/or any other suitable machine-learning layers for generating a representation vector, generating an embedding, and/or for performing other suitable operations. The ingestion layer 202a can be or include an ingestion layer, the first hidden layers 202b can be or include one or more first hidden layers, the second hidden layers 202c can be or include one or more second hidden layers, and the output layer 202d can be or include an output layer, though other suitable types of layers are possible for the machine-learning model 200. The ingestion layer 202a can ingest an input, such as text input and/or one or more 2-D images generated based on one or more 3-D models or components thereof, into the machine-learning model 200. For example, the ingestion layer 202a can receive input that includes image data for a 2-D image, which may be or include a 2-D snapshot or rendering of a 3-D model, or a component thereof, or the like and can ingest various attributes from the input. Three attributes 204a-c are illustrated as being ingested into the machine-learning model 200, but other suitable numbers (e.g., less than three or more than three) of attributes can be ingested into the machine-learning model 200 via the ingestion layer 202a without departing from the scope of the present disclosure.

The machine-learning model 200 can map the attributes 204a-c to features 206a-d via the first hidden layers 202b. As illustrated in FIG. 2, the machine-learning model 200 can map the three attributes 204a-c to four features 206a-d, though any other suitable numbers (e.g., less than four or more than four) of features can be included in or generated by the first hidden layers 202b. The first hidden layers 202b can include any suitable combination of convolutional layers, pooling layers, and the like for mapping the attributes 204a-c to the features 206a-d. In a particular example, the first hidden layers 202b can include four convolutional layers and one pooling layer for at least indirectly mapping (e.g., each layer can map inputs to outputs, etc.) the attributes 204a-c to the features 206a-d.

The machine-learning model 200 can map the features 206a-d to the features 208a-d via the second hidden layers 202c. As illustrated, the machine-learning model 200 maps the four features 206a-d to four features 208a-d, though any other suitable numbers (e.g., less than four or more than four) of features can be included in or generated by the second hidden layers 202c. The second hidden layers 202c can include any suitable combination of convolutional layers, pooling layers, and the like for mapping the features 206a-d to the features 208a-d. In one particular example, the second hidden layers 202c can include four convolutional layers and one pooling layer for at least indirectly mapping (e.g., each layer can map inputs to outputs, etc.) the features 206a-d to the features 208a-d. In some embodiments, the first hidden layers 202b and the second hidden layers 202c can be similar or identical to one another, though in other embodiments, the first hidden layers 202b and the second hidden layers 202c may not include similar or identical types of hidden layers or numbers of hidden layers.

In some embodiments, the ingestion layer 202a, the first hidden layers 202b, and/or the second hidden layers 202c can be supervised layers such that each of the ingestion layer 202a, the first hidden layers 202b, and/or the second hidden layers 202c may be trained via supervised training techniques. Supervised training techniques can involve inputting labeled training data into the layers and training the layers to map inputs to outputs using labels of the labeled training data. For example, training the supervised layers of the machine-learning model 200 can involve inputting labeled image data, or labeled query (e.g., text-based) data, into the ingestion layer 202a, labeled attributes into the first hidden layers 202b, labeled features into the second hidden layers 202c, or the like to train each of the layers to map respective inputs to respective outputs. In some examples, the training data may be unlabeled or may have labels applied by the machine-learning model 200 or any component thereof. For example, the training data may not have manually applied labels, but the machine-learning model 200 may apply labels to the training data based on attributes about the training data. This may be or include self-supervised training techniques performed by or with the machine-learning model 200 as a self-supervised machine-learning model.

In some embodiments, a combination of the ingestion layer 202a, the first hidden layers 202b, and the second hidden layers 202c may be similar to an image classification convolutional neural network (IC-CNN) such that first features generated by the machine-learning model 200 may be similar or identical to second features generated by the IC-CNN and may be generated using similar or identical techniques as techniques used by the IC-CNN. But, the machine-learning model 200 can post-process or otherwise use the generated features differently than the IC-CNN.

The machine-learning model 200 can generate a representation vector, or an embedding, by mapping the features 208a-d into multiple dimensions using the output layer 202d. For example, the machine-learning model 200 can use the output layer 202d to convert the features 208a-d into *N* numerical representations of the features 208a-d. The *N* numerical representations can be concatenated or otherwise combined to generate an output 210 that can be or include the representation vector. The output layer 202d may be trained using unsupervised training techniques, or the output layer 202d may be untrained. For example, the output layer 202d may be trained using one or more training data sets that do not include labels. In one particular example, the output layer 202d can be trained using an unlabeled training data set that includes features from input image data, or query (e.g., text-based) data, and output representation vector values or examples. Thus, the machine-learning model 200 can use supervised layers to generate features based on input image data or query data and can use unsupervised layers to transform the generated features into N dimensions to generate the representation vector. The representation vector can be output to facilitate searching for three-dimensional models, components thereof, and the like. In other examples, the output layer 202d may be or include an additional self-supervised layer such that the machine-learning model 200 includes only self-supervised layers or layers that are trained using self-supervising training techniques.

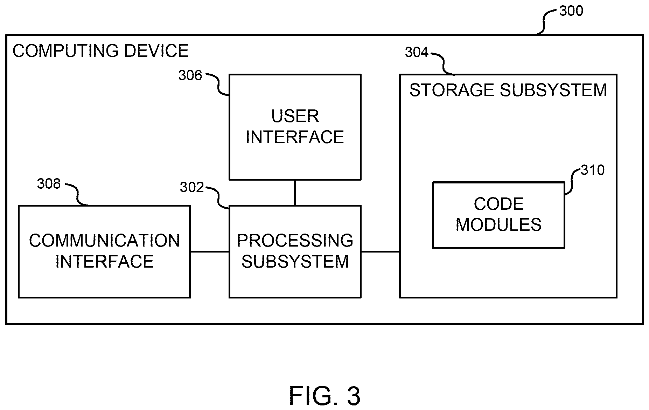

**FIG. 3** is a simplified block diagram of a computing device 300 that can be used to perform operations described herein. The computing device 300 can implement some or all functions, behaviors, and/or capabilities described herein that would use electronic storage or processing, as well as other functions, behaviors, or capabilities not expressly described. The computing device 300 can include a processing subsystem 302, a storage subsystem 304, a user interface 306, and/or a communication interface 308. The computing device 300 can also include other components, which may not be explicitly illustrated. As examples, the computing device 300 can include the 2-D image extracting service 114, the machine-learning model 116, the query embedding service 118, and the comparison service 120 illustrated and described with respect to FIG. 1. The computing device 300 can also include other components such as a battery, one or more power controllers, and other components operable to provide various enhanced capabilities. In some embodiments, the computing device 300 can be implemented in a desktop computer, a laptop computer, a mobile device, such as a tablet computer, a smart phone, a mobile phone, etc., a wearable device, a media device, application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform a function or combination of functions described above, and the like.

The storage subsystem 304 can be implemented using a local storage medium and/or a removable storage medium, such as disk memory, flash memory, such as a secure digital card, a universal serial bus flash drive, etc., or any other non-transitory storage medium, or a combination of media, and can include volatile and/or non-volatile storage media. Local storage can include random access memory (RAM) such as dynamic RAM (DRAM), static RAM (SRAM), or battery backed-up RAM. In some embodiments, the storage subsystem 304 can store one or more applications and/or operating system programs that can be executed by the processing subsystem 302, including programs to implement some or all operations described above that can be performed using a computer or computing device. For example, the storage subsystem 304 can store one or more code modules, such as code module 310, for implementing one or more process operations described herein.

A firmware and/or software implementation may be implemented with modules such as procedures, functions, and so on. A machine-readable medium tangibly embodying instructions may be used in implementing methodologies described herein. The code modules 310, such as instructions stored in memory, may be implemented within a processor or may be implemented external to the processor. As used herein, the term "memory" may refer to a type of long term, short term, volatile, nonvolatile, or other suitable storage medium and is not to be limited to any particular type of memory or number of memories or type of media upon which memory is stored. Moreover, the term "storage medium" or "storage device" may represent one or more memories for storing data, including read only memory (ROM), RAM, magnetic RAM, core memory, magnetic disk storage mediums, optical storage mediums, flash memory devices and/or other machine-readable mediums for storing information. The term "machine-readable medium" can include portable or fixed storage devices, optical storage devices, wireless channels, and/or various other storage mediums capable of storing one or more instructions and/or data.

Furthermore, embodiments may be implemented by hardware, software, scripting languages, firmware, middleware, microcode, hardware description languages, and/or any combination thereof. When implemented in software, firmware, middleware, scripting language, and/or microcode, program code or code segments to perform tasks may be stored in a machine readable medium such as a storage medium. A code segment, such as the code modules 310, or machine-executable instruction may represent a procedure, a function, a subprogram, a program, a routine, a subroutine, a module, a software package, a script, a class, or a combination of instructions, data structures, and/or program statements. A code segment may be coupled to another code segment or a hardware circuit by passing and/or receiving information, data, arguments, parameters, and/or memory contents. Information, arguments, parameters, data, etc., may be passed, forwarded, or transmitted by suitable means including memory sharing, message passing, token passing, network transmission, etc.

Implementation of the techniques, blocks, steps, and means described herein may be done in various ways. For example, the techniques, blocks, steps, and means may be implemented in hardware, software, or a combination thereof. For a hardware implementation, the processing units may be implemented within one or more ASICs, DSPs, DSPDs, PLDs, FPGAs, processors, controllers, micro-controllers, microprocessors, other electronic units designed to perform the functions described above, and/or a combination thereof.

Each code module of the code modules 310, or any subset thereof, may include sets of instructions or codes embodied on a computer-readable medium that can direct a processor of the computing device 300 to perform corresponding actions. The instructions may be configured to run in sequential order, in parallel, such as under different processing threads, or in a combination thereof. After loading a code module of the code modules 310 on a general-purpose computer system, the general-purpose computer can be transformed into a special-purpose computer system.

Computer programs incorporating various features described herein, such as in one or more of the code modules 310, may be encoded and stored on various computer readable storage media. Computer readable media encoded with the program code may be packaged with a compatible electronic device, or the program code may be provided separately from electronic devices such as via Internet download or as a separately packaged computer-readable storage medium, etc. The storage subsystem 304 can additionally store information useful for establishing network connections using the communication interface 308.

The user interface 306, which, in some embodiments, may be or include the user interface 132 illustrated and described with respect to FIG. 1, can include or interface with one or more input devices, such as a touch pad, a touch screen, a scroll wheel, a click wheel, a dial, a button, a switch, a keypad, a microphone, etc., as well as output devices, such as a video screen, indicator lights, speakers, headphone jacks, virtual-reality display, augmented-reality display, etc., together with supporting electronics such as digital-to-analog or analog-to-digital converters, signal processors, etc. A user can operate input devices of the user interface 306 to invoke the functionality of the computing device 300 and can view and/or hear output from the computing device 300 via output devices of the user interface 306. For some embodiments, the user interface 306 might not be present such as for a process using an ASIC. In other embodiments, the user interface 306 may be or include a digital user interface that can be generated and presented on a display device for a user of the computing device 300 to view and/or with which to interact via an input device such as a computer mouse or a touchscreen.

The processing subsystem 302 can be implemented as one or more processors such as integrated circuits, one or more single-core or multi-core microprocessors, microcontrollers, central processing unit, graphics processing unit, etc. In operation, the processing subsystem 302 can control operation of the computing device 300. In some embodiments, the processing subsystem 302 can execute a variety of programs in response to program code and can maintain multiple concurrently executing programs or processes. At a given time, some or all of a program code to be executed can reside in the processing subsystem 302 and/or in storage media such as the storage subsystem 304. Through programming, the processing subsystem 302 can provide various functionality for the computing device 300. The processing subsystem 302 can also execute other programs to control other functions of the computing device 300, including programs that may be stored in the storage subsystem 304.

The communication interface 308 can provide voice and/or data communication capability for the computing device 300. In some embodiments, the communication interface 308 can include radio frequency (RF) transceiver components for accessing wireless data networks (e.g., Wi-Fi network; 3G, 4G/LTE, 5G; etc.), mobile communication technologies, components for short-range wireless communication (e.g., using Bluetooth communication standards, NFC, etc.), other components, or combinations of technologies. In some embodiments, the communication interface 308 can provide wired connectivity, such as universal serial bus, Ethernet, universal asynchronous receiver/transmitter, etc., in addition to, or in lieu of, a wireless interface. The communication interface 308 can be implemented using a combination of hardware, such as driver circuits, antennas, modulators/demodulators, encoders/decoders, and other analog and/or digital signal processing circuits, etc., and software components. In some embodiments, the communication interface 308 can support multiple communication channels concurrently. In some embodiments, the communication interface 308 may not be used.

It will be appreciated that the computing device 300 is illustrative and that variations and modifications are possible. The computing device 300 can have various functionality, such as voice communication via cellular telephone networks, etc., not specifically described and can include components appropriate to such functionality. Further, while the computing device 300 is described with reference to particular blocks, it is to be understood that these blocks are defined for convenience of description and are not intended to imply a particular physical arrangement of component parts. For example, the processing subsystem 302, the storage subsystem 304, the user interface 306, and/or the communication interface 308 can be in one device or distributed among multiple devices. Further, the blocks need not correspond to physically distinct components. Blocks can be configured to perform various operations, for example by programming a processor or providing appropriate control circuitry, and various blocks might or might not be reconfigurable depending on how an initial configuration is obtained. Embodiments of the present invention can be realized in a variety of apparatuses including electronic devices implemented using a combination of circuitry and software. Electronic devices described herein can be implemented using the computing device 300.

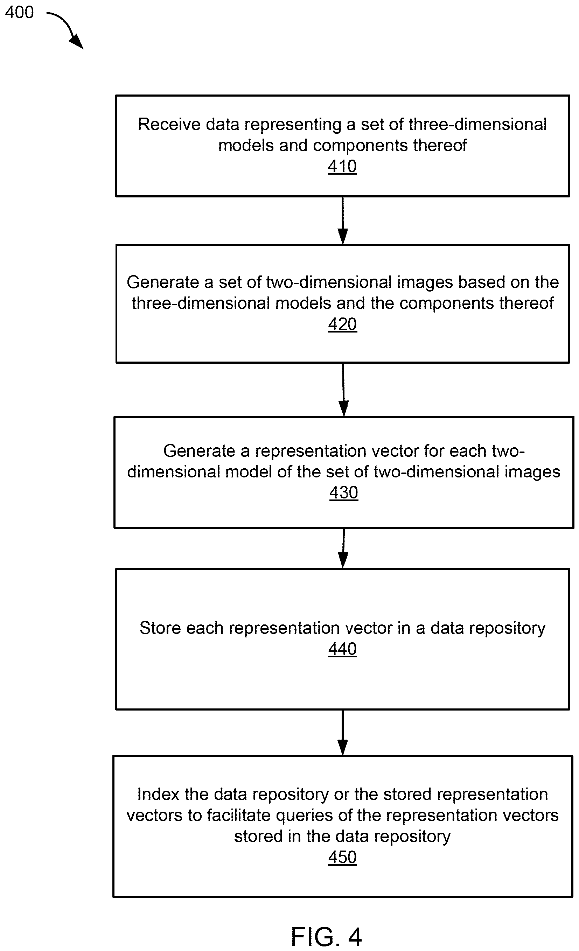

In **FIG. 4****,** a flowchart of an embodiment of a process 400 for generating and indexing a data store to facilitate a deep search for identifying components or 3-D models based on a query is illustrated. In some embodiments, the process 400 can be performed by the computing device 300 and/or any other suitable computing device. The operations of the process 400 are described in a particular order, but the operations of the process 400 can be performed in any other suitable order including substantially contemporaneously. One purpose of process 400 can include generating and/or indexing representation vectors for existing 3-D models and/or existing components of 3-D models to generate an indexed data repository, or an indexed set of representation vectors, to facilitate queries to identify one or more 3-D models and/or one or more components of 3-D models that correspond to a query, though the process 400 can be used for any other suitable purposes.

### Receiving data representing a set of three-dimensional models and components thereof

The process 400 can begin at block 410 with receiving data corresponding to a set of 3-D models and components thereof. The data may include model data, such as computer aided design (CAD) files or other suitable types of files, that can be extracted from each three-dimensional model of the set of three-dimensional models. The components may be or included subsets of the model data. For example, a particular 3-D model may be made up of or otherwise include one component, two components, three components, or more than three components. The computing device 300, or any service executable thereby, can extract each component of each 3-D model of the set of 3-D models. The set of 3-D models may be included in an asset store or other suitable storage location that can store the set of 3-D models. For example, the set of 3-D models may be stored in a model library or model database that can accumulate historical, and/or real-time, 3-D models. The model library may be associated with, or otherwise provided by, a service that can enable users to generate 3-D models or other suitable assets. In some embodiments, the computing device 300 can access the model library to receive the data corresponding to the set of 3-D models and components of 3-D models.

### Generating 2-D images based on the 3-D models and components thereof

At block 420, a set of 2-D images is generated based at least in part on the received data including the 3-D models and the components of 3-D models. The computing device 300, or any service thereof (e.g., the 2-D image extracting service 114), can receive the model data and can generate the set of 2-D images based on the input. For example, the computing device 300 can access each 3-D model of the set of 3-D models and can generate a first portion of the set of 2-D images based on the set of 3-D models. Additionally or alternatively, the computing device 300 can access each component of the components and can generate a second portion of the set of 2-D images based on the components. In some embodiments, generating a 2-D image can involve extracting a 2-D snapshot, or a 2-D thumbnail, from a 3-D model or from a component of a 3-D model. The component may be or include a 3-D portion of the 3-D model, a 2-D portion (e.g., a material) or representation of at least a portion of the 3-D model, or the like. The computing device 300 can identify a particular view of a 3-D model or of a component of a 3-D model and can transform the particular view into image data to extract the 2-D image.

### Generating representation vectors for the 2-D images

At block 430, representation vectors are generated for each 2-D image included in the set of 2-D images. At least one representation vector may be generated for each 2-D image. For example, the computing device 300 can input each 2-D image of the set of 2-D images, or any extracted image data thereof, into a machine-learning model, such as the machine-learning model 200, and the machine-learning model can generate a representation vector or an embedding for each 2-D image or for each set of extracted image data. The representation vectors can be generated using techniques similar or identical to those described with respect to FIG. 2 and the machine-learning model 200. In some embodiments, each representation vector generated for each 2-D image may be an *N*-dimensional vector that includes *N* numerical representations of a corresponding 2-D image.

### Storing the representation vectors

At block 440, the generated representation vectors are stored on a data repository such as the data repository 106. In some embodiments, the computing device 300 can receive the generated representation vectors corresponding to the set of 2-D images and can store the generated representation vectors in the data repository (e.g., associated with the respective three-dimensional models or components thereof) or in other suitable locations that can be accessed by the computing device 300. The computing device 300 may be configured to access the stored representation vectors and may, for each stored representation vector, be configured to identify a 3-D model, or a component of a 3-D model, that corresponds to the representation vector.

### Indexing the data repository or the data stored therein

At block 450, the data repository, or the data stored therein, is indexed to facilitate searching for 3-D models or components thereof. The computing device 30 can index, or cause to be indexed (e.g., via an indexing service), the set of representation vectors in the data repository, or the data repository itself, as indexed representation vectors. In a particular example, the set of representation vectors can be indexed or otherwise arranged by common features, by similarities between particular representation vectors, and the like. The computing device 300 can otherwise suitably cause the set of representation vectors to be stored and/or indexed in the data repository. Additionally or alternatively, the computing device 300 can continuously, or periodically, generate the set of representation vectors based on newly received or accessed model data, and the computing device 300 can continuously, or periodically, cause the set of representation vectors, which may include new or updated representation vectors based on the newly received or access model data, to be stored and/or indexed in the data repository.

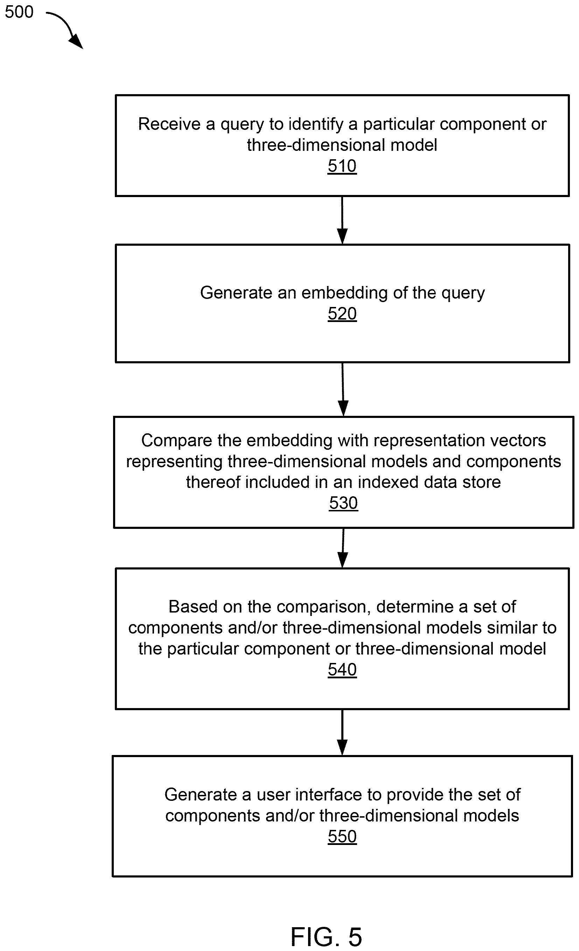

In **FIG. 5****,** a flowchart of an embodiment of a process 500 for identifying components or 3-D models based on a query using a deep search is illustrated. In some embodiments, the process 500 can be performed by the computing device 300 and/or any other suitable computing device. The operations of the process 500 are described in a particular order, but the operations of the process 500 can be performed in any other suitable order including substantially contemporaneously. One purpose of process 500 can include facilitating a deep search for a particular three-dimensional model or a particular component of a 3-D model based on a query input, though the process 500 can be used for any other suitable purposes.

### Receiving a query to identify a 3-D model or a component included in a 3-D model

The process 500 can begin at block 510 with receiving a query via user input. The computing device 300 may receive the query from an entity device. The query may be generated by an entity providing input to the entity device. In some embodiments, the query can include text-based input, non-text-based input, and/or any other or additional input. The text-based input may be or include one or more strings of natural language or characters, and the non-text-based input may be or include one or more images, one or more videos, audio input, and the like. The entity device may receive the text-based input and/or the non-text-based input and can generate the query. In some embodiments, the query may include a request to identify one or more 3-D models, one or more components of 3-D models, 3-D models or components similar to the text-based input and/or the non-text-based input, or a combination thereof based on the text-based input and/or the non-text-based input. The computing device 300 can receive the query from the entity device, and the computing device 300 can parse the query to determine how and/or whether to use the text-based input and/or the non-text-based input. In some embodiments, the query may indicate that the entity is requesting to receive or otherwise use a particular 3-D model or a particular component of a 3-D model, or 3-D models or components similar thereto.

### Generating an embedding of the query

At block 520, the computing device 300 generates an embedding of the query. The computing device 300 can execute any suitable service, such as an embedding service, to generate an embedding of the query, the text-based input, and/or the non-text-based input, or the like. Embedding the query, the text-based input, and/or the non-text-based input, or the like can allow the computing device 300 to generate and submit a separate, search query for searching the data repository to identify the particular 3-D model and/or the particular component of a 3-D model, or to identify a 3-D model or a component thereof that may be most similar to the particular 3-D model and/or the particular component of a 3-D model compared to other 3-D models and components. In some embodiments, generating an embedding of the query, or any component thereof, can involve transforming the query, or any component thereof, into a representation vector. For example, the embedding service can use the machine-learning model 200 to generate the embedding of the query. The embedding can be used to generate a search query that can be transmitted to the data repository.

### Comparing the embedding with representation vectors

At block 530, the embedding of the query is compared to a set of representation vectors included in the data repository. The computing device 300, or any other suitable computing device, may have previously generated and/or indexed representation vectors for each 3-D model of the set of 3-D models, or any component thereof, and the computing device 300 may access the previously generated representation vectors. The computing device 300 can compare the embedding of the query to each accessed representation vector of the set of representation vectors. The embedding of the query may be identical in dimension to each accessed representation vector of the set of representation vectors or may otherwise be suitable for comparison against each accessed representation vector of the set of representation vectors. For example, the embedding and each accessed representation vector of the set of representation vectors may each be dimension *N* such that the embedding and each of the representation vectors include *N* numerical representations for the query or for the respective 2-D image. Accordingly, the computing device 300 can determine a cosine similarity, a vector distance, a Euclidean distance, or the like between the embedding of the query and each accessed representation vector of the set of representation vectors.

### Determining a set of 3-D models and/or components most similar to the query

At block 540, based on the comparison at the block 530, the computing device 300 determines a set of 3-D models and/or components of 3-D models most similar to the query. In some embodiments, the computing device 300 determines, among the comparison or comparisons performed at the block 530, the set of 3-D models, or components thereof, by selecting the comparison values with the optimal value. The optimal value can include the lowest vector distance, the lowest Euclidean distance, the highest similarity score, such as a cosine similarity score, or the like. Thus, the selected 3-D models and/or components can include 3-D models and/or components with corresponding representation vectors characterized by the shortest distance, or highest similarity score, with respect to the embedding. The computing device 300 can generate the set of 3-D models and/or components based on the selected 3-D models and/or components.

### Generating a user interface to provide the set of 3-D models and/or components

At block 550, the computing device 300 can generate a user interface to provide the set of 3-D models and/or components to the entity that provided the query. The computing device 300 can provide the set of 3-D models and/or components to the user, for example via the user interface. For example, the computing device 300 can replace any input (e.g., the query, etc.) provided by the user with the user interface having the set of 3-D models and/or components. In some embodiments, the computing device 300 can provide an ordered list (e.g., in ascending order of distance comparisons, in descending order of similarity scores, etc.) of the 3-D models and/or components such that the list includes 3-D models and/or components of 3-D models with representation vectors having the lowest distance, or highest similarity scores, with respect to the embedding of the query compared to other 3-D models and/or components included in the data repository.

The set of 3-D models and/or components may be embedded in or otherwise presented on the user interface. For example, the computing device 300 can generate a set of interactive elements, and each interactive element of the set of interactive elements can correspond to a different 3-D model or component included in the set of 3-D models and/or components. Interacting with a particular interactive element of the set of interactive elements can cause the computing device 300 to populate a file associated with the entity with the 3-D model or the component of a 3-D model corresponding to the particular interactive element that was selected. The computing device 300 can transmit the user interface to the entity device to request subsequent input from the entity for a selection of the particular interactive element.

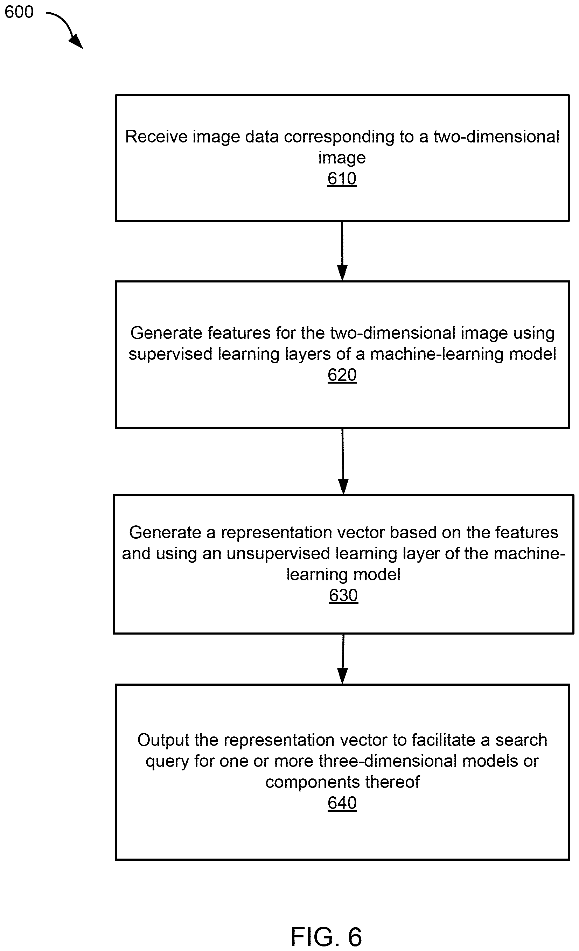

In **FIG. 6****,** a flowchart of an embodiment of a process 600 for generating a representation vector that represents a 2-D image for facilitating a deep search for a 3-D model or a component included therein is illustrated. In some embodiments, the process 600 can be performed by the computing device 300 and/or any other suitable computing device. The operations of the process 600 are described in a particular order, but the operations of the process 600 can be performed in any other suitable order including substantially contemporaneously. One purpose of process 600 can include generating a representation vector for one or more 2-D images desired to be used in a deep search for a particular 3-D model or a particular component of a 3-D model indicated by a query, though the process 600 can be used for any other suitable purposes.

### Receiving image data

The process 600 can begin at block 610 with receiving image data corresponding to a 2-D image. The 2-D image may be included in a set of 2-D images, which may correspond to a set of 3-D models or components thereof. The computing device 300 can receive the image data from user input, for example via a user interface or the like provide by the computing device 300. In some embodiments, the computing device 300 can receive the 2-D image via user input and can extract the image data from the 2-D image. Additionally or alternatively, the 2-D image may be or include a 2-D snapshot of a 3-D image, such as a 3-D model or a component thereof, a link to a network location storing a 2-D image or snapshot of a 3-D model or a component thereof, an edge-detected 2-D drawing input by a user, or the like.

### Generating features based on the image data using supervised machine-learning

At block 620, features are generated for the 2-D image. The computing device 300 can use a subset of the machine-learning model 200, which may be or include a hybrid machine-learning model, a self-supervised machine-learning model, or the like, to generate the features. For example, the computing device 300 can use supervised layers to generate features corresponding to the 2-D image and based on the received image data. The machine-learning model 200 can include any suitable number of convolutional layers, pooling layers, and the like to generate the features based on the input image data. For example, the machine-learning model 200 can extract attributes from the input image data and can map the attributes to the features using one or more convolutional layers and, optionally, one or more pooling layers. The features can include features of the 2-D image to which the input image data corresponds.

### Generating a representation vector

At block 630, a representation vector is generated based on the features. The computing device 300 can use a subset of the machine-learning model 200 to generate the representation vector. For example, the computing device 300 can use unsupervised layers, such as the output layer 202d, to generate the representation vector corresponding to the 2-D image and based on the generated features. Instead of a prediction layer, which may be common among image classification neural networks, the machine-learning model 200 may include and use an unsupervised or self-supervised layer, such as the output layer 202d, to transform the features into *N* dimensions or to otherwise generate the embedding, where *N* can be any suitable number such as from one to 100,000 or more. In some embodiments, the output layer 202d can perform one or more mathematical operations on the generated features to generate *N* numerical representations corresponding to the features, thus projecting the features into *N* dimensions. The machine-learning model 200 can concatenate or otherwise combine the *N* numerical representations corresponding to the features to generate the representation vector. In some embodiments, the representation vector can include an *N* × 1 matrix, where each row corresponds to a different numerical representation of the *N* numerical representations of the features. In some embodiments, multiple representation vectors may be combined, concatenated, or otherwise manipulated to generate a representation vector. For example, a mean vector may be generated from multiple representation vectors.

### Outputting the representation vector

At block 640, the representation vector is output for facilitating a search query for one or more 3-D models or components thereof. For example, the computing device 300 can output the representation vector, along with other representation vectors for other 2-D images of the set of 2-D images, for generating and/or indexing a data repository that can facilitate a deep search query that can be used to search for a 3-D model or a component thereof that corresponds most closely to the query. In some embodiments, the computing device 300 can store the representation vector in the data repository, and the computing device 300 can index, or otherwise arrange, the data repository. In some embodiments, the representation vector can be generated for a query for deep search. For example, the computing device 300 can receive the query and can generate an embedding based on the query by generating a representation vector based on the embedding. The representation vector based on the embedding can be used as an input to generate and transmit a deep search query to the data repository to identify one or more 3-D models or components thereof similar or identical to a particular 3-D model or a particular component of a 3-D model indicated by the original query.

Various features described herein, e.g., methods, apparatus, computer-readable media and the like, can be realized using a combination of dedicated components, programmable processors, and/or other programmable devices. Processes described herein can be implemented on the same processor or different processors. Where components are described as being configured to perform certain operations, such configuration can be accomplished, e.g., by designing electronic circuits to perform the operation, by programming programmable electronic circuits (such as microprocessors) to perform the operation, or a combination thereof. Further, while the embodiments described above may make reference to specific hardware and software components, those skilled in the art will appreciate that different combinations of hardware and/or software components may also be used and that particular operations described as being implemented in hardware might be implemented in software or vice versa.

Specific details are given in the above description to provide an understanding of the embodiments. However, it is understood that the embodiments may be practiced without these specific details. In some instances, well-known circuits, processes, algorithms, structures, and techniques may be shown without unnecessary detail in order to avoid obscuring the embodiments.

While the principles of the disclosure have been described above in connection with specific apparatus and methods, it is to be understood that this description is made only by way of example and not as limitation on the scope of the disclosure. Embodiments were chosen and described in order to explain the principles of the invention and practical applications to enable others skilled in the art to utilize the invention in various embodiments and with various modifications, as are suited to a particular use contemplated. It will be appreciated that the description is intended to cover modifications and equivalents.

Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc.

A recitation of "a", "an", or "the" is intended to mean "one or more" unless specifically indicated to the contrary. Patents, patent applications, publications, and descriptions mentioned here are incorporated by reference in their entirety for all purposes. None is admitted to be prior art.

## Claims

1. A method comprising:
receiving, by a computing device, 3-D model data that includes a set of 3-D models and components included in the set of 3-D models, the components included in the set of 3-D models represented by a plurality of 2-D images, each 2-D image of the plurality of 2-D images representing a component of the components included in the set of 3-D models or a group of the components included in the set of 3-D models;
generating, by the computing device and using a machine-learning model, a plurality of representation vectors, each representation vector of the plurality of representation vectors corresponding to a different 2-D image of the plurality of 2-D images;
indexing, by the computing device, the plurality of representation vectors to facilitate one or more queries with respect to the components included in the set of 3-D models or the groups of the components included in the set of 3-D models;
receiving, by the computing device, a query from an entity, the query indicating a request by the entity to identify one or more 2-D images of the plurality of 2-D images that are associated with the query;
comparing, by the computing device, an embedding of the query to each representation vector of the plurality of representation vectors to identify a set of representation vectors that at least partially match the embedding; and
providing, by the computing device and on a digital user interface, the one or more 2-D images of the plurality of 2-D images corresponding to the set of representation vectors.

2. The method of claim 1, wherein receiving the 3-D model data comprises parsing each 3-D model of the set of 3-D models to identify one or more components included in the 3-D model, and wherein the one or more components are included in the components included in the set of 3-D models.

3. The method of claim 1 or 2, wherein comparing the embedding to each representation vector of the plurality of representation vectors comprises transforming the query into the embedding using the machine-learning model.

4. The method of any one of the preceding claims, wherein generating the plurality of representation vectors comprises:
generating, for each 3-D model included of the set of 3-D models, a first 2-D image based on a particular view of the 3-D model, the first 2-D image included in a first portion of the plurality of the 2-D images;
generating, for each component of the components, a second 2-D image based on a particular view of the component, the second 2-D image included in a second portion of the plurality of 2-D images;
generating, using one or more self-supervised layers of the machine-learning model and for each 2-D image included in the first portion of the plurality of the 2-D images, first features corresponding to the 2-D image; and
generating, using the one or more self-supervised layers of the machine-learning model and for each 2-D image included in the second portion of the plurality of the 2-D images, second features corresponding to the 2-D image.

5. The method of claim 4, wherein generating the plurality of representation vectors comprises generating, using an additional self-supervised layer of the machine-learning model, the plurality of representation vectors based on the first features and the second features.

6. The method of claim 5, wherein:
indexing the plurality of representation vectors comprises storing each representation vector of the plurality of representation vectors in a data repository, wherein the plurality of representation vectors are arranged to optimize the one or more queries that involve the plurality of representation vectors; and
comparing the embedding to each representation vector of the plurality of representation vectors comprises accessing the data repository to receive the plurality of representation vectors.

7. The method of any one of the preceding claims, wherein receiving the query from an entity comprises receiving text-based input from the entity, and wherein the text-based input comprises a string of natural language or characters indicating the request by the entity to receive a particular component of a 3-D model.

8. The method of any one of the preceding claims, further comprising:
receiving subsequent input from the entity, the subsequent input indicating selection of a particular representation vector of the set of representation vectors; and
automatically populating a file associated with the entity with a component or a 3-D model that is represented by the particular representation vector of the set of representation vectors.

9. A system comprising:
a processing device; and
a non-transitory computer-readable medium comprising instructions executable by the processing device to cause the processing device to perform operations comprising:
receiving 3-D model data that includes a set of 3-D models and components included in the set of 3-D models, the components included in the set of 3-D models represented by a plurality of 2-D images, each 2-D image of the plurality of 2-D images representing a component of the components included in the set of 3-D models or a group of the components included in the set of 3-D models;
generating, using a machine-learning model, a plurality of representation vectors, each representation vector of the plurality of representation vectors corresponding to a different 2-D image of the plurality of 2-D images;
indexing the plurality of representation vectors to facilitate one or more queries with respect to the components included in the set of 3-D models or the groups of the components included in the set of 3-D models;
receiving a query from an entity, the query indicating a request by the entity to identify one or more 2-D images of the plurality of 2-D images that are associated with the query;
comparing an embedding of the query to each representation vector of the plurality of representation vectors to identify a set of representation vectors that at least partially match the embedding; and
providing, on a digital user interface, the one or more 2-D images of the plurality of 2-D images corresponding to the set of representation vectors.

10. The system of claim 9, wherein the operation of receiving the 3-D model data comprises parsing each 3-D model of the set of 3-D models to identify one or more components included in the 3-D model, and wherein the one or more components are included in the components included in the set of 3-D models.

11. The system of claim 9 or 10, wherein the operation of comparing the embedding to each representation vector of the plurality of representation vectors comprises transforming the query into the embedding using the machine-learning model.

12. The system of any one of claims 9-11, wherein the operation of generating the plurality of representation vectors comprises:
generating, for each 3-D model included of the set of 3-D models, a first 2-D image based on a particular view of the 3-D model, the first 2-D image included in a first portion of the plurality of the 2-D images;
generating, for each component of the components, a second 2-D image based on a particular view of the component, the second 2-D image included in a second portion of the plurality of 2-D images;
generating, using one or more self-supervised layers of the machine-learning model and for each 2-D image included in the first portion of the plurality of the 2-D images, first features corresponding to the 2-D image; and
generating, using the one or more self-supervised layers of the machine-learning model and for each 2-D image included in the second portion of the plurality of the 2-D images, second features corresponding to the 2-D image.

13. The system of claim 12, wherein:
the operation of generating the plurality of representation vectors comprises generating, using an additional self-supervised layer of the machine-learning model, the plurality of representation vectors based on the first features and the second features;
the operation of indexing the plurality of representation vectors comprises storing each representation vector of the plurality of representation vectors in a data repository, wherein the plurality of representation vectors are arranged to optimize the one or more queries that involve the plurality of representation vectors; and
the operation of comparing the embedding to each representation vector of the plurality of representation vectors comprises accessing the data repository to receive the plurality of representation vectors.

14. The system of any one of claims 9-13, wherein the operations further comprise:
receiving subsequent input from the entity, the subsequent input indicating selection of a particular representation vector of the set of representation vectors; and
automatically populating a file associated with the entity with a component or a 3-D model that is represented by the particular representation vector of the set of representation vectors.

15. A non-transitory computer-readable medium comprising instructions executable by a processing device to cause the processing device to perform the method of any one of claims 1-8.
